# FASCICULE DE BREVET EUROPEEN

(11) **EP 1 037 765 B1**
(45) Date de publication et mention de la délivrance du brevet: **01.10.2003**
(21) Numéro de dépôt: 97913275.0
(22) Date de dépôt: 07.11.1997
(51) Int. Cl.: B60L 7/18

(54) **PROCEDE DE FREINAGE RECUPERATIF D'UN VEHICULE ELECTRIQUE**
REGENERATIVES BREMSVERFAHREN FÜR ELEKTRISCHES FAHRZEUG
REGENERATIVE BRAKING METHOD FOR ELECTRIC VEHICLE

(43) Date de publication de la demande: 27.09.2000
(73) Titulaire: Renault s.a.s., 92100 Boulogne Billancourt (FR)
(72) Inventeur: MALLEDANT, Gilbert, F-95120 Ermont (FR); PAPAZIAN, Jean-Charles, F-38220 Vizille (FR)
(86) Numéro de dépôt international: FR9702003
(87) Numéro de publication internationale: WO99024283

(56) Documents cités:
- WO-A-93/03940
- US-A- 5 472 264
- PATENT ABSTRACTS OF JAPAN vol. 012, no. 201 (M-707), 10 juin 1988 & JP 63 007110 A (YAMAHA MOTOR CO LTD), 13 janvier 1988,
- PATENT ABSTRACTS OF JAPAN vol. 096, no. 006, 28 juin 1996 & JP 08 033115 A (TOYOTA AUTOM LOOM WORKS LTD), 2 février 1996,

## Description

L'invention concerne les véhicules électriques et, plus particulièrement dans de tels véhicules électriques, un procédé pour freiner le véhicule dès que le conducteur relève le pied de la pédale d'accélération.

Dans les véhicules électriques, il est connu d'introduire un freinage du moteur électrique lorsque la pédale d'accélérateur est complètement relevée. Cette solution présente l'inconvénient de réaliser un freinage électrique en fin de course de pédale d'accélérateur, ce qui est peu naturel pour un usager d'un véhicule à moteur thermique. En outre, la valeur de ce freinage électrique est imprécise.

La publication US 5472264 concerne un système de freinage pour ce type de véhicule et introduit la notion de vitesse de relevé de pied de la pédale d'accélérateur.

Cette solution présente l'inconvénient de ne se préoccuper que partiellement de cette information et par exemple, de traiter de façon équivalente les différents relevés possible, fonction de la position et de la vitesse de relevé de la pédale d'accélérateur.

Il est également connu d'introduire un freinage du moteur électrique en fonction de l'enfoncement de la pédale de frein et on obtient donc simultanément deux freinages, mécanique et électrique. Les inconvénients d'un tel système sont, d'une part, l'ajout d'un élément supplémentaire tel qu'un potentiomètre pour mesurer la course de la pédale de frein et, d'autre part, de ne pas utiliser pleinement le freinage électrique qui est récupératif d'énergie à la place du freinage mécanique.

Le but de la présente invention est donc de mettre en oeuvre, dans un véhicule électrique, un procédé de freinage électrique qui ne présente pas les inconvénients des solutions actuellement connues et succinctement exposées ci-dessus.

Ce but est donc de mettre en oeuvre un procédé de freinage électrique qui permet de récupérer de l'énergie électrique pendant la durée du freinage électrique et d'obtenir un freinage adapté aux circonstances réelles de la conduite du véhicule, c'est-à-dire un freinage plus ou moins fort selon le degré d'urgence.

Ce but est atteint en introduisant un couple de freinage sur le moteur électrique du véhicule dont la valeur est une fonction de la vitesse du relevé de pied de la pédale d'accélérateur, et dont les conditions de mise en oeuvre dépendent de la position de cette pédale.

L'invention concerne donc un procédé de freinage récupératif d'un véhicule électrique comprenant :
- un moteur électrique dont l'arbre de sortie est connecté mécaniquement aux roues motrices du véhicule,
- une batterie d'accumulateurs pour alimenter le moteur électrique en énergie électrique,
- une pédale d'accélérateur associée à un dispositif de mesure de la position de ladite pédale pour fournir des signaux électriques représentatifs de cette position,
- une pédale de frein associée à un dispositif de détection de début de course de ladite pédale de frein pour fournir un signal électrique de début de course,
- un capteur de vitesse des roues motrices pour fournir la valeur de la vitesse de déplacement du véhicule, et
- un dispositif de commande du moteur électrique pour alimenter ledit moteur en fonction de la position de la pédale d'accélérateur, de la pédale de frein et de la vitesse de déplacement du véhicule,
le dit procédé comprenant les étapes suivantes :
- calculer la vitesse de déplacement VAC de la pédale d'accélérateur entre au moins deux positions successives POS/AC de ladite pédale,
- calculer une valeur f(VAC) du couple de freinage électrique, lorsque la vitesse de déplacement (VAC) de la pédale est négative à condition que la pédale de frein ne soit pas sollicitée,
caractérisé en ce que le dit procédé comprend en outre les étapes suivantes :
- mettre en mémoire selon la position de pédale d'accélérateur la valeur de freinage calculée (f (VAC)),
- utiliser la valeur mémorisée au moment du relevé complet de la pédale pour maintenir le freinage tant que la vitesse du véhicule n'est pas nulle ou que le conducteur n'appuie pas sur la pédale de frein ou d'accélérateur.

Le procédé défini ci-dessus est également caractérisé par le fait que la mise en mémoire n'est réalisée que pour une position déterminée de la pédale d'accélérateur correspondant à une position proche du relevé complet de la pédale d'accélérateur, la valeur (f (VAC)) étant dans le cas contraire directement utilisée pour modifier la valeur de consigne de couple du moteur électrique.

Selon une autre caractéristique de l'invention, les positions ultimes de relevé de la pédale d'accélérateur entraînent l'utilisation de la valeur (f (VAC)) mise en mémoire pour maintenir le freinage.

D'autres caractéristiques et avantages de la présente invention apparaîtront à la lecture de la description suivante d'un exemple particulier de réalisation, ladite description étant faite en relation avec les dessins joints dans lesquels :

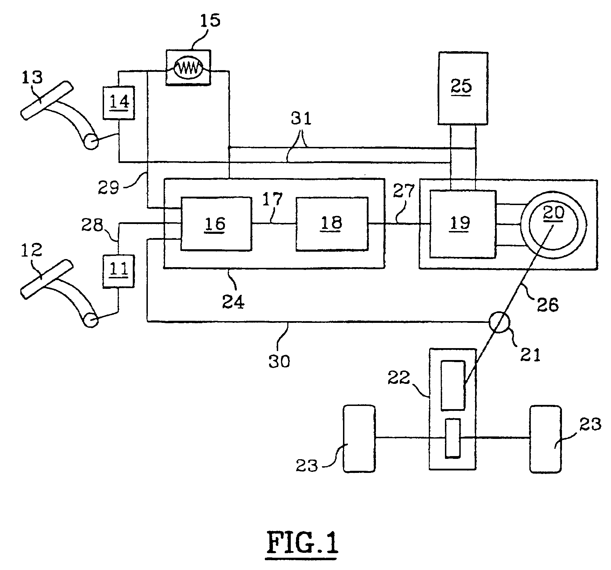

- la figure 1 est un schéma fonctionnel d'un véhicule électrique mettant en oeuvre le procédé de freinage selon l'invention,
- la figure 2 est un diagramme qui permet de décrire le procédé de freinage selon l'invention,
- la figure 3 est un diagramme montrant, en fonction du temps, un cycle de positions de la pédale d'accélérateur du véhicule électrique, et
- la figure 4 est un diagramme montrant, en fonction du temps, les valeurs de la vitesse du relevé de pédale d'accélérateur et du couple de freinage électrique en correspondance avec le diagramme de la figure 3.

Un véhicule électrique comprend de manière classique :
- un moteur électrique 20 dont l'arbre de sortie 26 est connecté mécaniquement aux roues motrices 23 par un dispositif réducteur/différentiel 22,
- une batterie d'accumulateurs 25 pour stocker l'énergie électrique,
- un dispositif de commande 19 du moteur électrique 20 pour alimenter ledit moteur en énergie électrique fournie par la batterie d'accumulateurs 25,
- un pédale d'accélérateur 12 associée à un dispositif de mesure 11 de la position de ladite pédale pour fournir des signaux représentatifs de cette position,
- une pédale de frein 13 associée à un dispositif 14 de détection de début de course de ladite pédale pour fournir un signal représentatif de ce début de course,
- un capteur de vitesse 21 pour mesurer la vitesse de rotation des roues motrices 23 et fournir la valeur de vitesse de déplacement Vv du véhicule électrique, et
- un calculateur 24 pour calculer la valeur Ic du courant d'alimentation du moteur 20, valeur dite de consigne, qui est appliquée au dispositif de commande 19 pour lui permettre d'effectuer les commutations du courant de batterie vers le moteur électrique de manière que ce dernier fournisse un couple correspondant à la valeur de consigne Ic.

Le calculateur 24 comprend à titre indicatif :
- un dispositif de numérisation 16 des signaux fournis par les dispositifs 11 et 14 et par le capteur de vitesse 21 sur les conducteurs 28, 29 et 30,
- un calculateur 18 proprement dit, et
- un câble de liaison 17 entre le dispositif de numérisation 16 et le calculateur 18.

Le calculateur 18 fournit la valeur du courant de consigne Ic sur le câble de liaison 27.

A la pédale de frein 13 et au dispositif de détection de début de course est associé un feu de stop 15 qui est alimenté par la batterie 25 par l'intermédiaire des conducteurs 31.

Le procédé de freinage récupératif selon l'invention est mis en oeuvre par le calculateur 18 à partir des signaux représentatifs des positions de la pédale d'accélérateur 12, de la pédale de frein 13 et de la vitesse du véhicule.

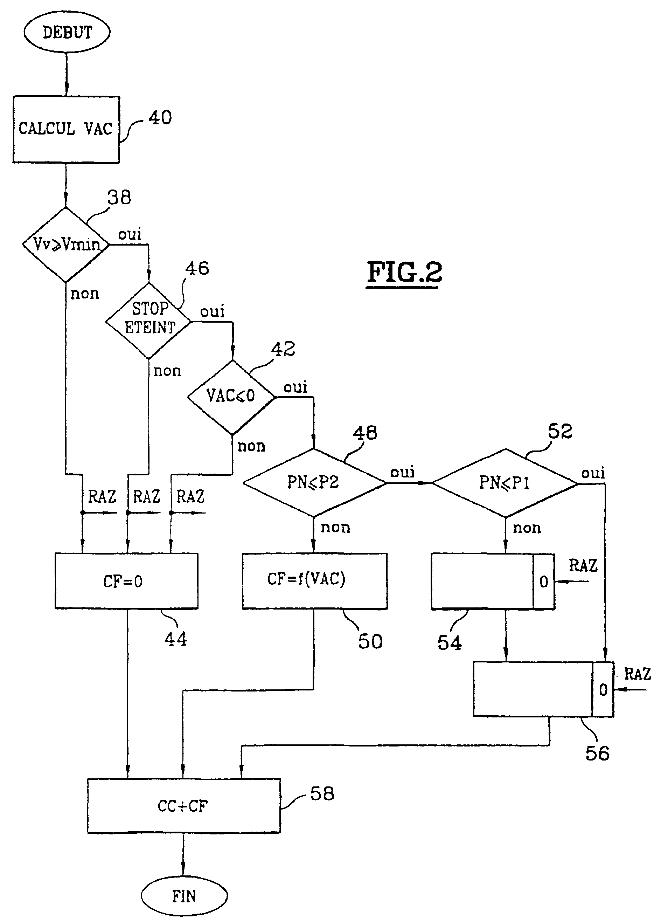

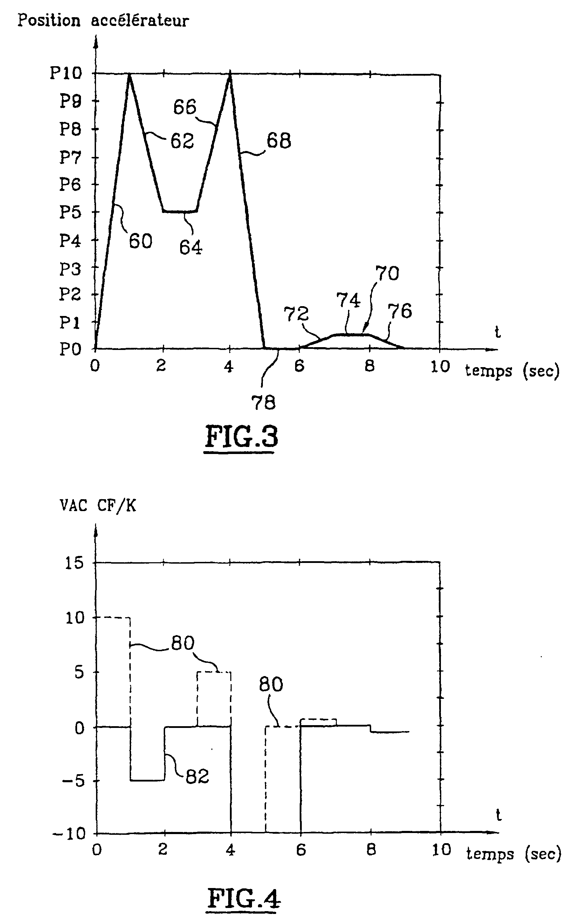

L'organigramme de ce procédé est représenté sur la figure 2 et commence par le calcul 40 de la vitesse VAC de déplacement de la pédale d'accélérateur 12 entre deux positions successives, par exemple les positions P5 et P4 (figure 3). Si la vitesse Vv du véhicule est inférieure à une vitesse minimale Vmin (losange 38), alors il n'y a pas de freinage électrique récupératif et donc pas de couple de freinage CF à appliquer (rectangle 44). Si Vv ≥ Vmin mais que le STOP n'est pas éteint (freinage mécanique), alors il n'y a pas de freinage récupératif donc CF = 0. Si le STOP est éteint mais que la vitesse de la pédale VAC est positive (accélération), alors il n'y a pas de freinage récupératif et CF = 0.

Si la vitesse calculée est négative (passage de P5 à P4), cela signifie que le conducteur relève la pédale d'accélérateur et qu'il souhaite décélérer. Alors la réponse est OUI à l'étape 42 et il faut calculer le couple de freinage CF.

Le procédé selon l'invention prévoit deux cas possibles selon la position de la pédale d'accélérateur.

Dans le premier cas, la position de la pédale d'accélérateur est éloignée de la position de relevé complet, par exemple une des positions PN comprises entre P2 à P10, alors la réponse à la question du losange 48 : PN ≤ P2 ? est NON de sorte que le calculateur calcule (rectangle 50) une valeur de couple de freinage récupératif CF telle que CF = f(VAC) qui s'écrit CF = K.VAC lorsque la fonction est proportionnelle selon un facteur K.

Si la réponse à la question PN ≤ P2 ? (losange 48) est OUI, cela signifie que la pédale d'accélérateur est proche du relevé complet et l'invention prévoit la mise en mémoire de la valeur du couple de freinage récupératif CF pour pouvoir utiliser cette valeur lorsque la pédale d'accélérateur est complètement relevée.

Le calcul de CF pour sa mise en mémoire est effectuée lorsque la réponse à la question PN ≤ P1 ? (losange 52) est NON, ce qui signifie que la pédale d'accélérateur est entre les positions P2 et P1. La valeur de CF est calculée comme une fonction de VAC et est mise en mémoire (rectangles 54 et 56).

Si la réponse à la question du losange 52 (PN ≤ P1 ?) est OUI, cela signifie que la pédale d'accélérateur est pratiquement en position relevé complet et qu'il ne sera plus possible de calculer une valeur CF en fonction de VAC dès que la pédale d'accélérateur sera complètement relevée. La valeur de CF qui est alors utilisée est celle mise en mémoire précédemment par les étapes 54 et 56.

Ainsi, tant que la pédale d'accélérateur est relevée, la valeur du couple de freinage CF sera celle mise en mémoire par les étapes 54 et 56.

La valeur de CF mise en mémoire est remise à zéro dès que la vitesse du véhicule Vv devient inférieure à Vmin car s'il n'en était pas ainsi, le véhicule se mettrait à reculer. Cette remise à zéro de la mémoire 54, 56 est obtenue par le signal RAZ appliqué aux rectangles 54 et 56. Cette remise à zéro est également réalisée lorsque le STOP s'allume (losange 46) ou lorsque le conducteur appuie sur la pédale d'accélérateur (losange 42).

Le rectangle 58 indique la valeur du couple de consigne qui est appliquée et qui est la somme de la consigne du couple Cc en l'absence de mise en oeuvre du procédé selon l'invention et de la valeur CF calculée selon le procédé.

Le diagramme de la figure 3 représente les positions PN (P1 à P10) de la pédale d'accélérateur en fonction du temps en secondes. La partie 60 représente un enfoncement de la pédale d'accélérateur à fond (P10) à vitesse constante positive VAC1 pendant une seconde. La partie 62 représente un relevé de pédale d'accélérateur pendant une seconde à une vitesse négative VAC2 = - VAC1/2 pour arriver à la position P5 (mi-course).

La partie 64 représente un maintien de pédale à la position P5 pendant une seconde soit VAC = 0. La partie 66 représente un enfoncement de la pédale pendant une seconde à la vitesse positive VAC3 = - VAC2 = VAC1/2 pour arriver à la position P10. La partie 68 représente un relevé de pédale complet en une seconde à la vitesse négative VAC4 = - VAC1 pour arriver à P0. La courbe 70 représente un léger enfoncement (partie 72) de la pédale d'accélérateur sans atteindre P1, puis retour au relevé complet (partie 76) après un plateau (partie 74) d'une seconde.

A ce diagramme de la figure 3 correspondent les diagrammes 80 (en pointillés) de la vitesse VAC de la pédale et 82 (en trait plein) du couple de freinage CF/K si la fonction f est du type proportionnel. Ainsi, pendant la partie 60, la vitesse VAC est égale à + 10, c'est-à-dire 10 positions/sec. Cette vitesse devient négative et égale à - 5 positions/sec pour la partie 62, puis devient nulle pour la partie horizontale 64, remonte à + 5 positions/sec. pour la partie 66, devient négative et égale à - 10 positions/sec. pour la partie 68.

Entre la partie 68 et la courbe 70, la vitesse est nulle mais devient légèrement positive pour la partie montante 72 de la courbe 70 pour revenir à la valeur nulle pour le plateau 74 ou légèrement inférieure à zéro pour la partie 76. Cependant, il est à remarquer que la position P1 n'est jamais dépassée, ce qui signifie qu'aucun calcul de CF n'est effectué.

A ce tracé 80 de la courbe des vitesses de la pédale d'accélérateur correspond le tracé 82 de la valeur de couple de freinage CF. La valeur de CF/K est nulle pendant tout le cycle indiqué par la courbe 70 car la pédale d'accélérateur reste entre P0 et P1.

## Revendications

1. Procédé de freinage récupératif d'un véhicule électrique comprenant :
- un moteur électrique (20) dont l'arbre de sortie (26) est connecté mécaniquement aux roues motrices (23) du véhicule,
- une batterie d'accumulateurs (25) pour alimenter le moteur électrique (20) en énergie électrique,
- une pédale d'accélérateurs (12) associée à un dispositif de mesure (11) de la position de ladite pédale pour fournir des signaux électriques représentatifs de cette position,
- une pédale de frein (13) associée à un dispositif (14) de détection de début de course de ladite pédale de frein pour fournir un signal électrique de début de course,
- un capteur de vitesse (21) des roues motrices (23) pour fournir la valeur de la vitesse de déplacement des véhicules, et
- un dispositif de commande (16, 18, 19) du moteur électrique (20) pour alimenter ledit moteur en fonction de la position de la pédale d'accélérateur (12), de la pédale de frein (13) et de la vitesse de déplacement du véhicule,
le dit procédé comprenant les étapes suivantes :
- calculer (40) la vitesse de déplacement VAC de la pédale d'accélérateur entre au moins deux positions successives POS/AC de ladite pédale,
- calculer (50) une valeur (f(VAC)) du couple de freinage électrique, lorsque la vitesse de déplacement (VAC) de la pédale est négative à condition que la pédale de frein ne soit pas sollicitée,
**caractérisé en ce que** ledit procédé comprend les étapes suivantes :
- mettre en mémoire (54) selon la position de pédale d'accélérateur la valeur de freinage calculée (f (VAC)),
- utiliser la valeur mémorisée (56) au moment du relevé complet de la pédale pour maintenir le freinage tant que la vitesse du véhicule n'est pas nulle ou que le conducteur n'appuie pas sur la pédale de frein ou d'accélérateur.

2. Procédé de freinage récupératif selon la revendication 1, **caractérisé en ce que** le procédé défini ci-dessus est également **caractérisé par le fait que** la mise en mémoire (54) n'est réalisée que pour une position déterminée de la pédale d'accélérateur correspondant à une position proche du relevé complet de la pédale d'accélérateur, la valeur de freinage calculée (f (VAC)) étant dans le cas contraire (50) directement utilisée pour modifier (58) la valeur de consigne de couple du moteur électrique.

3. Procédé de freinage récupératif selon la revendication 1 ou 2, **caractérisé en ce que** les positions ultimes de relevé de la pédale d'accélérateur entraînent l'utilisation de la valeur (f (VAC))mise en mémoire pour maintenir le freinage.

## Patentansprüche

1. Verfahren zum Bremsen mit Wiedergewinnung von Energie für ein Elektrofahrzeug, mit:
- einem Elektromotor (20), dessen Ausgangswelle (26) mechanisch mit den Antriebsrädern (23) des Fahrzeuges verbunden ist,
- einer Akkumulatorbatterie (25) zur Versorgung des Elektromotors (20) mit elektrischer Energie,
- einem Beschleunigungspedal (12), das einer Anordnung (11) zur Messung der Stellung dieses Pedals zugeordnet ist zur Erzeugung elektrischer Signale für diese Stellung,
- einem Bremspedal (13), das einer Anordnung (14) zur Feststellung des Beginns der Bewegung des Bremspedals zugeordnet ist zur Erzeugung eines elektrischen Signals für diesen Beginn,
- einem Fühler (21) für die Geschwindigkeit der Antriebsräder (23) zur Erzeugung eines Wertes für die Geschwindigkeit der Fortbewegung des Fahrzeuges und
- einer Anordnung (16, 18, 19) zur Steuerung des Elektromotors (20) um diesen zu versorgen als Funktion der Stellung des Beschleunigungspedals (12), des Bremspedals (13) und der Geschwindigkeit der Fortbewegung des Fahrzeuges;
wobei das Verfahren die folgenden Schritte aufweist:
- berechnen (40) der Geschwindigkeit VAC der Bewegung des Beschleunigungspedals zwischen wenigstens zwei aufeinander folgenden Stellen POS/AC dieses Pedals,
- berechnen (50) eines Wertes (f(VAC)) des elektrischen Bremsmomentes, wenn die Geschwindigkeit der Bewegung des Pedals (VAC) negativ ist unter der Bedingung, dass die Bremse nicht beaufschlagt wird,
**dadurch gekennzeichnet, dass** das Verfahren außerdem die folgenden Schritte aufweist:
- speichern (54) entsprechend der Stellung des Beschleunigungspedals des berechneten Wertes (f(VAC)) der Bremsung,
- verwenden des gespeicherten Wertes (56) zum Zeitpunkt der vollständigen Freigabe des Pedals um die Bremsung beizubehalten, solange die Geschwindigkeit des Fahrzeuges größer als Null ist oder der Fahrer weder das Bremspedal noch das Beschleunigungspedal betätigt.

2. Verfahren zum Bremsen mit Wiedergewinnung von Energie nach Anspruch 1, **dadurch gekennzeichnet, dass** das oben beschriebene Verfahren außerdem den Schritt aufweist des Speicherns (54) nur für eine vorbestimmte Stellung des Beschleunigungspedals entsprechend einer Stellung nahe derjenigen der vollständigen Freigabe des Beschleunigungspedals, wobei der berechnete Wert f(VAC) des Bremsmomentes im gegenteiligen Fall (50) direkt verwendet wird um den Sollwert des Momentes des Elektromotors zu verändern (58)

3. Verfahren zum Bremsen mit Wiedergewinnung von Energie nach Anspruch 1 oder 2, **dadurch gekennzeichnet, dass** die Endstellungen des Beschleunigungspedals vor dessen Freigabe die Verwendung des gespeicherten Wertes (f(VAC)) zum Aufrechterhalten der Bremsung bewirken.

## Claims

1. A regenerative braking method for an electric vehicle comprising:
- an electric motor (20) whose output shaft (26) is connected mechanically to the drive wheels (23) of the vehicle;
- a rank of batteries (25) adapted to supply electricity to the electric motor (20);
- an accelerator pedal (12) associated with a device (11) for measuring the position of this pedal in order to supply electric signals representative of this position;
- a brake pedal (13) associated with a device (14) for detecting the beginning of the stroke of this brake pedal in order to supply an electric start-of-stroke signal;
- a sensor (21) of the speed of the drive wheels (23) in order to supply the value of the speed of travel of the vehicle;
- a control device (16, 18, 19) for the electric motor (20) adapted to supply this motor as a function of the position of the accelerator pedal (12), the brake pedal (13) and the speed of travel of the vehicle;
the method comprising the following stages:
- calculation (40) of the speed of travel (VAC) of the accelerator pedal between at least two successive positions (POS/AC) of this pedal;
- calculation (50) of a value (f(VAC)) of the electric braking torque, when the speed of travel (VAC) of the pedal is negative, provided that the brake pedal is not being used,
**characterised in that** the method further comprises the following stages:
- memory storage (54), in accordance with the position of the accelerator pedal, of the braking value calculated (f(VAC));
- use of the stored value (56) when the pedal is completely raised in order to maintain the braking as long as the speed of vehicle is not zero or the driver is not depressing the brake or accelerator pedal.

2. A regenerative braking method as claimed in claim 1, **characterised in that** the method described above is also **characterised in that** the memory storage (54) takes place only for a predetermined position of the accelerator pedal corresponding to a position close to complete raising of the accelerator pedal, the braking value calculated (f(VAC)) being directly used in the opposite case (50) to modify (58) the electric motor torque reference value.

3. A regenerative braking method as claimed in claim 1 or 2, **characterised in that** the ultimate positions of raising of the accelerator pedal entrain the use of the value (f(VAC)) stored in the memory to maintain the braking.
